# FASCICULE DE BREVET EUROPEEN

(11) **EP 4 373 652 B1**
(45) Date de publication et mention de la délivrance du brevet: **06.05.2026**
(21) Numéro de dépôt: 22760874.2
(22) Date de dépôt: 22.07.2022
(51) Int. Cl.: B29C 49/20, B29C 49/04

(54) **PROCÉDÉ D'INSERTION AU SEIN D'UNE PARAISON D'UN COMPOSANT POUR LA FABRICATION D'UN RÉSERVOIR EN PLASTIQUE POUR VÉHICULE AUTOMOBILE.**
VERFAHREN ZUM EINFÜGEN EINER KOMPONENTE IN EINEN VORFORMLING ZUR HERSTELLUNG EINES KUNSTSTOFFBEHÄLTERS FÜR KRAFTFAHRZEUGE.
METHOD FOR INSERTING A COMPONENT INTO A PARISON FOR MANUFACTURING A PLASTIC TANK FOR A MOTOR VEHICLE.

(30) Priorité: 23.07.2021 LU 102848
(43) Date de publication de la demande: 29.05.2024
(73) Titulaire: OPmobility C-Power Belgium Research, 1200 Woluwe-Saint-Lambert (BE)
(72) Inventeur: DUEZ, Laurent, 1130 BRUXELLES (BE); CHAUSSINAND, Antoine, 1130 BRUXELLES (BE); COING, Jean-François, 1130 BRUXELLES (BE); DUPONT, Serge, 1130 BRUXELLES (BE)
(74) Mandataire: LLR
(86) Numéro de dépôt international: PCT/EP2022/070704
(87) Numéro de publication internationale: WO 2023/002051

(56) Documents cités:
- WO-A1-2018/008784
- DE-B3- 102014 221 567
- JP-A- S6 132 735
- JP-A- S63 214 270
- US-A1- 2012 161 371

## Description

L'invention concerne le domaine technique des réservoirs en matière plastique pour véhicule automobile.

L'invention concerne un procédé de fabrication d'un réservoir en matière plastique pour véhicule automobile. Classiquement, les réservoirs en matière plastique pour véhicule automobile sont obtenus par extrusion-soufflage d'une paraison. Lors de la fabrication de ces réservoirs, des dispositifs tels que par exemple des baffles anti-bruit ou baffles anti-slosh, des éléments de renfort interne, des vannes, des lignes de ventilation ou de liquide, des capteurs de température, de niveau ou de qualité sont introduits au sein de la paraison en vue de leur insertion dans le réservoir final.

Un problème majeur lié à l'insertion de ces dispositifs au sein de la paraison est la limitation de leur taille. Il est en effet toujours recherché d'éviter un contact entre les dispositifs et la paraison avant soufflage de cette dernière en vue de l'obtention du réservoir en matière plastique. En effet, un contact direct entre la paraison et un des dispositifs est susceptible d'entraîner des défauts de production des réservoirs, voir des déchirures de la paraison.

Différentes solutions ont été proposées en vue de résoudre ce problème, plus particulièrement lorsque la paraison se présente sous la forme d'une structure tubulaire. La première consiste à augmenter la taille de la tête d'extrusion de manière à augmenter la circonférence intérieure de la paraison en forme de tube et ainsi l'espace disponible pour l'insertion des dispositifs. L'utilisation d'une tête d'extrusion de plus grande taille entraîne toutefois une utilisation d'une plus grande quantité de plastique pour réaliser le réservoir au travers notamment de chutes ou déchets de matière plastique plus importants.

Alternativement, le document JP3179841 divulgue un mécanisme d'étirement de la paraison avant l'insertion des dispositifs permettant d'augmenter l'espace disponible pour l'insertion des dispositifs. Toutefois, cette augmentation n'est que localisée aux endroits de la paraison qui sont accessibles audit mécanisme.

Le document DE102014221567 propose d'introduire, pendant la formation de la paraison, un cylindre creux sous la tête de buse, de sorte que la matière plastique fondue se déverse sur la surface extérieure du cylindre pour former la paraison. Les dispositifs sont insérés dans le cylindre creux, qui est donc interposé entre les dispositifs et la paraison, pendant que la paraison est insérée autour des dispositifs. Le cylindre creux est enlevé après que la paraison ait été formée.

En utilisant le vocabulaire de la revendication 1, DE102014221567 divulgue essentiellement : Un procédé d'insertion au sein d'une paraison d'un composant pour la fabrication d'un réservoir en plastique pour véhicule automobile, ledit composant étant apte à être inséré au sein de la paraison lors de la fabrication du réservoir en matière plastique pour véhicule automobile, le composant ayant au moins une dimension dans au moins un plan perpendiculaire à la direction d'extrusion de la paraison sensiblement égale ou supérieure à la distance minimum entre deux points opposés situés sur une paroi intérieure pleine de la paraison dans ledit au moins un plan perpendiculaire.

L'invention a notamment pour objectif de pallier les inconvénients de l'art antérieur.

Plus précisément, un objectif de l'invention, est de fournir un procédé selon la revendication 1.

Selon l'invention, un tel composant est apte à être inséré au sein d'une paraison lors de la fabrication du réservoir en matière plastique pour véhicule automobile, le composant ayant au moins une dimension dans au moins un plan perpendiculaire à la direction d'extrusion de la paraison sensiblement égale ou supérieure à la distance minimum entre deux points opposés situés sur une paroi intérieure de la paraison dans ledit au moins un plan perpendiculaire, le composant comprend une armature comprenant un premier moyen de déflection comprenant au moins une surface apte à entrer en contact et à guider la course de la paraison lorsque le composant est inséré au sein de la paraison.

Le principe général de l'invention repose sur l'utilisation d'un composant comprenant un premier moyen de déflection comprenant au moins une surface apte à entrer en contact et à guider la course de la paraison lorsque le composant est inséré au sein de la paraison, ledit premier moyen de déflection étant une glissière par exemple.

Ainsi, l'invention repose sur une approche tout à fait nouvelle et inventive de mise en contact du composant inséré au sein de la paraison avec cette dernière. Le composant comprenant au moins une surface apte à entrer en contact et à guider la course de la paraison lorsque ce dernier est inséré au sein de la paraison permet de réduire la distance entre la paraison et le composant, ce qui permet de diminuer le taux de rebut. L'utilisation d'un tel composant permet en outre d'éviter d'augmenter la taille de la tête d'extrusion pour un composant présentant au moins une dimension proche de la distance minimum entre deux points opposés situés sur une paroi intérieure de la paraison, par exemple au moins une dimension proche du diamètre intérieur d'une paraison tubulaire.

On comprend que la paroi intérieure de la paraison est de préférence pleine, de façon que la paroi de la paraison est amenée à recouvrir le composant, ou à être chaussée autour du composant. Ainsi, le composant a une dimension dans un plan perpendiculaire à la direction d'extrusion de la paraison sensiblement égale ou supérieure à la distance minimum entre deux points opposés situés sur une paroi intérieure de la paraison dans le plan perpendiculaire, sans pour autant traverser la paraison. En d'autres termes, il n'y a pas d'ouverture pratiquée dans la paraison entre l'extrusion et le soufflage.

Par l'expression « une surface apte à entrer en contact et à guider la course de la paraison », on entend désigner le fait que la surface en entrant en contact avec la paraison ne fait que guider la course de cette dernière sans entraîner de dégradations telles que des déchirures par exemple.

On notera que la distance minimum entre deux points opposés situés sur une paroi intérieure de la paraison est considérée en sortie d'extrudeuse, avant le soufflage, c'est à dire en fin d'extrusion, ou au moins lorsqu'une partie de la paraison est sortie de l'extrudeuse, par exemple lorsque 40%, voire 60% de la longueur finale de la paraison est formée. La comparaison avec la dimension du composant est donc effectuée avant toute modification de la dimension de la paraison, lors par exemple avant du pré-soufflage ou du soufflage.

Avantageusement, le premier moyen de déflection est situé en déport de l'armature.

Par l'expression « situé en déport de l'armature », on entend désigner le fait que le premier moyen de déflection se situe sur la périphérie extérieure de l'armature.

Ainsi, un premier moyen de déflection situé en déport de l'armature permet une meilleure répartition des contraintes mécaniques induites sur le composant par une meilleure solidarisation entre l'armature et le premier moyen de déflection du fait de la localisation de ce dernier.

Selon un mode de réalisation préférentiel, le composant pour réservoir en matière plastique pour véhicule automobile est tel que le premier moyen de déflection comprend au moins deux surfaces aptes à entrer en contact et à guider la course de la paraison lorsque le composant est inséré au sein de la paraison, préférentiellement lesdites au moins deux surfaces sont situées à l'opposé l'une de l'autre par rapport à l'armature.

Ainsi, un premier moyen de déflection comprenant au moins deux surfaces aptes à entrer en contact et à guider la course de la paraison permet un meilleur contrôle du guidage de la course de la paraison. Il est en outre avantageux que lesdites au moins deux surfaces soient situées à l'opposé l'une de l'autre sur l'armature, une telle disposition permettant d'obtenir une meilleure répartition des contraintes subies par le composant lors de son insertion au sein de la paraison.

Selon un mode de réalisation préféré du mode précédent, le composant pour réservoir en matière plastique pour véhicule automobile est tel que les au moins deux surfaces aptes à entrer en contact et à guider la course de la paraison présentent des aires de contact avec la paraison sensiblement égales.

Ainsi, deux surfaces aptes à entrer en contact et à guider la course de la paraison présentant des aires de contact avec la paraison sensiblement égales permettent d'appliquer sur le composant des contraintes mécaniques de même ordre de grandeur pour chaque surface.

Selon une variante de l'invention, le composant pour réservoir en matière plastique pour véhicule automobile est tel que le premier moyen de déflection présente sur tout ou partie de sa surface apte à entrer en contact et à guider la course de la paraison une forme incurvée en regard de l'armature.

Ainsi une forme incurvée permet de réduire le risque de déchirure de la paraison. Préférentiellement, le premier moyen de déflection présente une forme ayant une première extrémité telle que le composant présente à cette première extrémité, dans au moins un plan perpendiculaire à la direction d'extrusion de la paraison, une dimension inférieure à la distance minimum entre deux points opposés situés sur une paroi intérieure de la paraison au sein de laquelle il doit être inséré, la taille du composant augmentant selon une pente comprise entre 20° et 40° par écartement de la surface du premier moyen de déflection en regard de la paraison par rapport à l'armature. Une telle pente permet d'obtenir un faible frottement de la paraison sur le premier moyen de déflection. La pente comprise entre 20° et 40° est maintenue jusqu'à obtention de la dimension maximale du composant correspondant à une seconde extrémité du premier moyen de déflection. La seconde extrémité du premier moyen de déflection présente une forme arrondie pour éviter une déchirure de la paraison, préférentiellement la première extrémité du premier moyen de déflection présente une forme arrondie également.

Selon un mode de réalisation préféré, le composant pour réservoir en matière plastique pour véhicule automobile est tel que le premier moyen de déflection comprend au moins deux surfaces aptes à entrer en contact et à guider la course de la paraison, chacune des surfaces présentant sur tout ou partie une forme incurvée en regard de l'armature.

Selon un mode de réalisation préféré, le composant pour réservoir en matière plastique pour véhicule automobile est tel qu'il comprend un second moyen de déflection comportant une surface apte à entrer en contact et à guider la course de la paraison lorsque le composant est inséré au sein de la paraison.

Ainsi, la présence sur l'armature d'au moins deux moyens de déflection permet de mieux contrôler le guidage de la paraison par rapport à l'armature les supportant.

On comprend que l'armature fait partie du composant, notamment lorsque la fabrication est achevée. En d'autres termes, l'armature avec les moyens de déflection fait partie du composant, elle est destinée à demeurer dans le réservoir une fois sa fabrication achevée.

Selon un mode de réalisation, des moyens de déflection externes sont prévus en dehors de l'armature, par exemple sur des moyens d'insertion (tels qu'une canne d'insertion) du composant dans la paraison, destinés à être retirés du réservoir après l'étape de soufflage. Ces moyens de déflection externes peuvent être en combinaison ou en alternative à la présence d'un premier moyen de déflection prévu sur l'armature du composant.

Selon une variante préférée, le composant pour réservoir en matière plastique pour véhicule automobile est tel que le second moyen de déflection est situé en déport de l'armature.

Selon une variante préférée, le composant pour réservoir en matière plastique pour véhicule automobile est tel que le premier et le second moyen de déflection sont situés à l'opposé l'un de l'autre par rapport à l'armature.

Ainsi, la présence sur l'armature d'au moins deux moyens de déflection situés à l'opposé l'un de l'autre par rapport à l'armature permet de mieux contrôler et répartir les sollicitations mécaniques induites sur l'armature.

Selon une variante préférée, le composant pour réservoir en matière plastique pour véhicule automobile est tel que l'armature comprend au moins un dispositif choisi parmi un élément de renfort interne, un baffle anti-bruit ou baffle anti-slosh, une vanne, une ligne de ventilation ou de liquide, un capteur de température, un capteur de niveau ou un capteur de qualité.

Selon une variante préférée du mode de réalisation précédent, le composant pour réservoir en matière plastique pour véhicule est tel que l'armature comprend au moins un élément de renfort interne, ledit élément de renfort interne étant apte à solidariser au moins deux parois du réservoir en matière plastique pour véhicule automobile, préférentiellement deux parois opposées du réservoir en matière plastique pour véhicule automobile.

Par l'expression « ledit élément de renfort interne étant apte à solidariser au moins deux parois du réservoir », on entend désigner le fait que l'élément de renfort interne permet une connexion entre deux parois du réservoir. Une partie ou la totalité de l'élément de renfort interne est donc destinée à être en contact avec le liquide contenu dans le réservoir en fonction de la quantité de liquide contenu. L'élément de renfort interne comprend préférentiellement à ses extrémités opposées des zones aptes à être soudées à la paraison et donc aux parois du réservoir.

Selon une variante préférée des deux modes de réalisations précédents, le composant est tel que la plus grande distance entre le plan médian de l'armature et un plan parallèle au plan médian et comprenant la surface apte à entrer en contact et à guider la course de la paraison du premier moyen de déflection est sensiblement égale à la distance entre le plan médian de l'armature et la surface extérieure du au moins un dispositif la plus éloignée du plan médian de l'armature. Dans le cas d'un élément de renfort interne, le premier moyen de déflection a une dimension sensiblement égale à la longueur de l'élément de renfort interne, ladite dimension du premier moyen de déflection considérée étant située dans le même plan que celui de la longueur de l'élément de renfort interne. Le au moins un dispositif est situé à proximité du premier moyen de déflection sur l'armature.

Ainsi, de telles dimensions permettent au premier moyen de déflection d'avoir un effet de bouclier, empêchant un contact direct entre le au moins un dispositif et la paraison. Ceci s'applique également au second moyen de déflection.

Par l'expression « plan médian de l'armature », on entend désigner le plan qui se situe dans le milieu de l'armature dans l'axe de la direction d'extrusion.

Selon une alternative au mode de réalisation précédent, le composant est tel que la plus grande distance entre le plan médian de l'armature et un plan parallèle au plan médian et comprenant la surface apte à entrer en contact et à guider la course de la paraison du premier moyen de déflection est sensiblement inférieure à la distance entre le plan médian de l'armature et la surface extérieure du dispositif la plus éloignée du plan médian de l'armature. Ladite surface extérieure du dispositif la plus éloignée du plan médian de l'armature considérée étant celle en regard de la paraison lors de l'insertion du composant au sein de cette dernière. Dans le cas d'un élément de renfort interne, le premier moyen de déflection a une dimension sensiblement inférieure à la longueur de l'élément de renfort interne, ladite dimension du premier moyen de déflection considérée étant située dans le même plan que celui de la longueur de l'élément de renfort interne. Le au moins un dispositif est situé à proximité du premier moyen de déflection sur l'armature

Ainsi un tel mode de réalisation permet une réduction de masse du composant. Ceci s'applique également au second moyen de déflection.

Selon un mode de réalisation préféré, le composant pour réservoir en matière plastique pour véhicule automobile est tel que le premier moyen de déflection est à base d'un matériau dont la température de fusion est supérieure à la température de la paraison en sortie de tête d'extrusion. Le second moyen de déflection est également à base d'un matériau dont la température de fusion est supérieure à la température de la paraison en sortie de tête d'extrusion.

Ainsi, un tel matériau permet d'obtenir un meilleur glissement de la paraison sur la surface du moyen de déflection en évitant des phénomènes de soudure.

Généralement, la surface du premier moyen de déflection est fabriquée dans un matériau ayant une température de fusion supérieure à celle de la paraison en sortie d'extrudeuse, de préférence supérieure à 165°C, de préférence encore supérieure à 180°C, voire supérieure à 200°C. Ainsi, on réduit le risque que le composant se soude sur les parois de la paraison pendant son insertion. Par exemple, la température d'une paraison en polyéthylène en sortie de tête d'extrusion peut atteindre 200°C. La paraison peut notamment être faite dans du polyéthylène et la surface du premier moyen de déflection peut être faite dans un métal, ou dans du polyoxyméthylène (POM).

Selon un mode de réalisation préféré, le composant pour réservoir en matière plastique pour véhicule automobile est tel que le premier moyen de déflection est à base d'un matériau ayant un coefficient de friction inférieur au coefficient de friction du matériau de la paraison. Ainsi lorsque la paraison est en polyéthylène, la surface du premier moyen de déflection est avantageusement faite dans un métal ou un plastique, à l'exclusion du polyéthylène et du polypropylène.

Selon un mode de réalisation préféré, le composant pour réservoir en matière plastique pour véhicule automobile est tel que le premier moyen de déflection et/ou le second moyen de déflection et/ou le dispositif choisi parmi un élément de renfort interne, un baffle anti-bruit ou baffle anti-slosh, une vanne, une ligne de ventilation ou de liquide, un capteur de température, un capteur de niveau ou un capteur de qualités sont/est fixé(s) sur l'armature par « clipage ».

Ainsi un « clipage » permet une manutention et une fixation facile des éléments constituant le composant.

Selon une alternative au mode de réalisation précédent, le composant pour réservoir en matière plastique pour véhicule automobile est tel que le premier moyen de déflection et/ou le second moyen de déflection et l'armature forme(nt) une structure monobloc.

Selon une variante préférée, le composant pour réservoir en matière plastique pour véhicule automobile est tel que le premier moyen de déflection et/ou le second moyen de déflexion présente(nt) des bords arrondis.

Ainsi, la présence de bords arrondis sur le(s) moyen(s) de déflection permet de réduire les risques de déchirure de la paraison.

Selon une variante préférée, le composant pour réservoir en matière plastique pour véhicule automobile est tel que l'armature comprend un organe de réception apte à recevoir un moyen d'insertion tel qu'une canne d'insertion par exemple. Ledit organe de réception se présente avantageusement sous la forme d'un trou ou d'un trou borgne. Cet organe de réception est généralement situé sur l'armature à l'opposé du(es) moyen(s) de déflection.

Selon une variante préférée, le composant pour réservoir en matière plastique pour véhicule automobile est tel que l'armature comprend une pluralité de trous traversant. Préférentiellement, l'armature est également munie de moyens de rigidification tels que des nervures.

Ainsi, la présence de trous traversant dans l'armature permet un mouvement plus aisé du liquide contenu dans le réservoir. La présence de moyens de rigidification sur l'armature permet à cette dernière de mieux résister aux contraintes liées à l'insertion du composant au sein de l'armature.

Selon une mise en œuvre avantageuse, ledit procédé de fabrication comprend au moins les étapes suivantes, de préférence successives :
- Extrusion d'une paraison présentant une section interne,
- Insertion au sein de la paraison d'un composant selon l'invention.

Au cours de l'extrusion, la paraison est progressivement libérée de la tête d'extrudeuse. La paraison présente ainsi une extrémité libre, c'est-à-dire une extrémité qui n'est plus engagée dans la tête d'extrudeuse. C'est par cette extrémité libre que le composant est inséré dans la paraison. On entend par « paraison extrudée » la partie de la paraison déjà formée et sortie de l'extrudeuse. La paraison dans laquelle on insère le composant peut avoir une longueur inférieure à la longueur finale de la paraison. En effet, l'insertion du composant dans la paraison peut avoir lieu alors que la paraison n'est pas encore entièrement extrudée.

De façon avantageuse, le procédé de fabrication est tel qu'en début d'extrusion de la paraison, l'extrémité libre de la paraison est à une altitude initiale et, en fin d'extrusion de la paraison, l'extrémité libre de la paraison est à une altitude finale, et lors de l'extrusion de la paraison, l'extrémité libre de la paraison se déplace de l'altitude initiale à l'altitude finale en parcourant une distance dite longueur finale de la paraison, et le composant est inséré au sein de la paraison extrudée, par l'extrémité libre, lorsque l'extrémité libre de la paraison extrudée a parcouru au moins 40 % de la longueur finale, préférentiellement au moins 60 % de la longueur finale.

L'invention a également pour objet un procédé d'insertion au sein d'une paraison d'un composant tel que décrit ci-avant, pour la fabrication d'un réservoir en plastique pour véhicule automobile, dans lequel :
- au début de l'insertion au sein de la paraison du composant, la paraison entre en contact avec le premier moyen de déflection, puis
- la course de la paraison lorsque le composant est inséré au sein de la paraison est guidée par la surface du premier moyen de déflection.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un composant pour réservoir en matière plastique pour véhicule automobile selon l'invention,
- la figure 2 illustre le composant pour réservoir en matière plastique pour véhicule automobile selon l'invention présenté à la figure 1 en vue du dessus,
- les figures 3 et 4 décrivent l'étape d'insertion au sein de la paraison d'un composant selon l'invention mise en œuvre lors du procédé de fabrication d'un réservoir en matière plastique pour véhicule automobile.

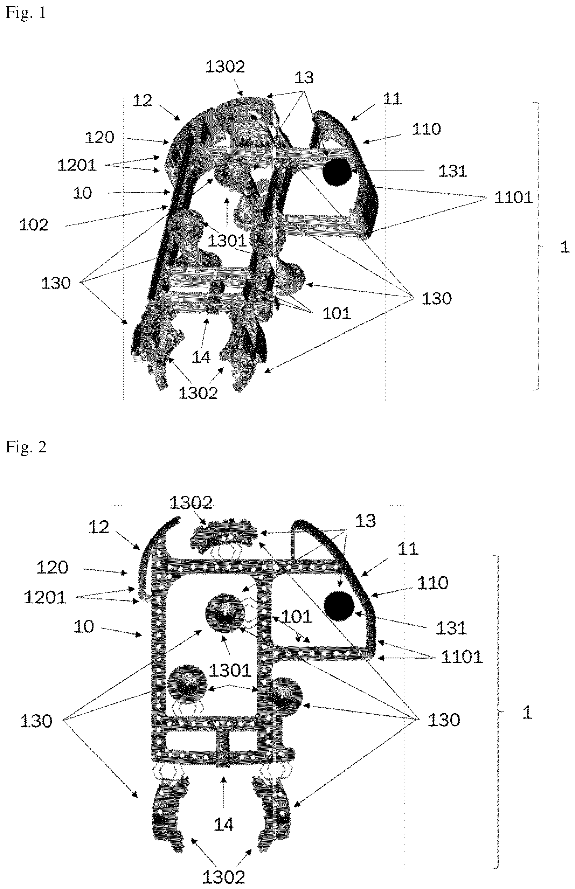

On présente, en relation avec la figure 1, un mode de réalisation du composant 1 pour réservoir en matière plastique pour véhicule automobile selon l'invention. Ledit composant 1 comprend une armature 10 comprenant un premier moyen de déflection 11 comprenant au moins une surface 110 apte à entrer en contact et à guider la course de la paraison lorsque le composant 1 est inséré au sein de la paraison et un second moyen de déflection 12 comportant une surface 120 apte à entrer en contact et à guider la course de la paraison lorsque le composant est inséré au sein de la paraison. Chacune des surfaces 110, 120 présente une forme incurvée en regard de l'armature 10. Lesdits premier et second moyens de déflection 11, 12 sont situés en déport de l'armature 10 et à l'opposé l'un de l'autre par rapport à l'armature 10. Les premier et second moyens de déflection présentent des bords arrondis 1101, 1201 permettant de réduire les risques de déchirure de la paraison lors de la fabrication du réservoir en matière plastique pour véhicule automobile. L'armature 10 du composant 1 est munie de trous traversant 101 ainsi que de moyens de rigidification 102 sous forme de nervures. L'armature 10 comprend également une pluralité de dispositifs 13 dont des éléments de renfort interne 130 et une vanne 131, lesdits éléments de renfort interne 130 se présentant sous la forme de pilier en forme de diabolo 1301 ou de système 1302 comprenant deux extrémités opposées en forme de parenthèse aptes à être fixées à la paraison, lesdites extrémités étant connectées par au moins deux lamelles. Par l'expression « extrémités opposées en forme de parenthèse », on entend désigner le fait que ces deux extrémités sont opposées l'une à l'autre et donc situées de part et d'autre du système mais qu'elles ont également une forme constituée de deux arcs de cercle inscrits l'un dans l'autre et reliés entre eux. L'armature 10 comporte également un organe de réception 14 apte à recevoir un moyen d'insertion tel qu'une canne d'insertion par exemple. Ledit organe de réception 14 est un trou traversant. Les premier et second moyens de déflection 11, 12 et l'armature 10 forment une structure monobloc d'un seul tenant. Alternativement, les premier et second moyens de déflection 11, 12 sont fixés sur l'armature 10 par vissage, soudage ou clipage. Les éléments de renfort interne 130 et la vanne 131 sont fixés sur l'armature 10 par clipage. Les premier et second moyens de déflection 11, 12 sont à base d'un matériau dont la température de fusion est supérieure à la température de la paraison en sortie de tête d'extrusion. On observe que les premier et second moyens de déflection 11, 12 sont localisés du côté de l'armature 10 du composant 1 destiné à pénétrer en premier dans la paraison lors de la fabrication d'un réservoir en matière plastique pour véhicule automobile.

La figure 2 illustre le composant pour réservoir en matière plastique pour véhicule automobile selon l'invention présenté à la figure 1 en vue du dessus. Le composant 1 pour réservoir en matière plastique pour véhicule automobile comprend une armature 10 munie de trous traversant. Cette armature 10 comprend un premier et un second moyen de déflection 11, 12 et également un organe de réception 14 apte à recevoir un moyen d'insertion tel qu'une canne d'insertion. Les premier et second moyens de déflection comprennent respectivement au moins une surface 110, 120 apte à entrer en contact et à guider la course de la paraison lorsque le composant 1 est inséré au sein de la paraison. Les premier et second moyens de déflection 11, 12 présentent des bords arrondis 1101, 1201. L'armature 10 comporte également une pluralité de dispositifs 13 dont une vanne 131 et des éléments de renfort interne 130 se présentant sous la forme de pilier en forme de diabolo 1301 ou de système 1302 comprenant deux extrémités opposées en forme de parenthèse aptes à être fixées à la paraison, lesdites extrémités étant connectées par au moins deux lamelles. On observe que les premier et second moyens de déflection 11, 12 sont localisés du côté de l'armature 10 du composant 1 destiné à pénétrer en premier dans la paraison lors de la fabrication d'un réservoir en matière plastique pour véhicule automobile. Lesdits premier et second moyens de déflection sont disposés sur l'armature 10 de manière à éviter que la paraison entre en contact avec les surfaces extérieures des dispositifs 13 lors de l'insertion du composant 1 en son sein.

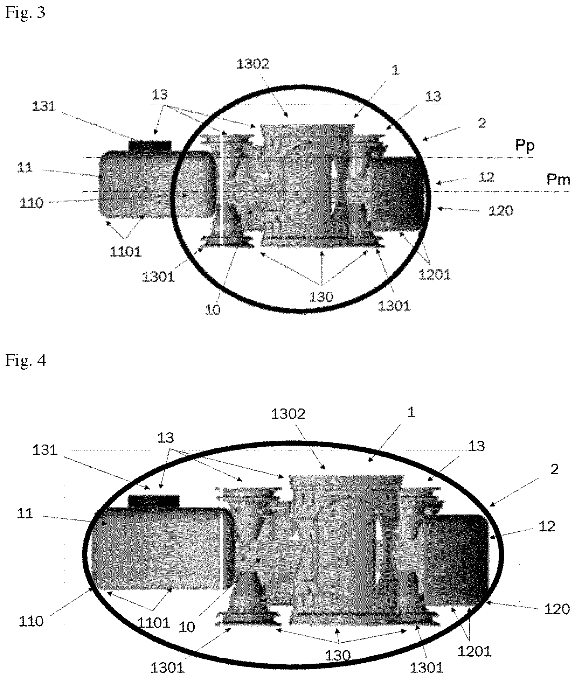

Les figure 3 et 4 illustrent l'étape d'insertion au sein d'une paraison 2 d'un composant 1 selon l'invention mise en œuvre lors du procédé de fabrication d'un réservoir en matière plastique pour véhicule automobile. La figure 3 présente en vue du dessus selon la direction d'extrusion, le début de l'étape d'insertion du composant 1 pour réservoir en matière plastique pour véhicule automobile lors de la fabrication dudit réservoir. On observe que la paraison 2 de forme sensiblement tubulaire entre en contact avec les premier et second moyens de déflection 11, 12 disposés en déport d'une armature 10 comprenant également des dispositifs 13 tels qu'une vanne 131 et des éléments de renfort interne 130 dont certains se présentent sous la forme de pilier en forme de diabolo 1301 ou d'un système 1302 comprenant deux extrémités opposées en forme de parenthèse aptes à être fixées à la paraison, lesdites extrémités étant connectées par au moins deux lamelles. Les premier et second moyens de déflection 11, 12 comprennent respectivement au moins une surface 110, 120 entrant en contact et guidant la course de la paraison 2 et présentent des bords arrondis 1101, 1201. On observe que la plus grande distance entre le plan médian Pm de l'armature 10 et un plan parallèle Pp au plan médian et traversant les surface 110, 120 apte à entrer en contact et à guider la course de la paraison des respectivement premier moyen de déflection 11 et second moyen de déflection 12 est sensiblement inférieure à la distance entre le plan médian de l'armature 10 et la surface extérieure du dispositif 13 la plus éloignée du plan médian de l'armature 10, ladite surface extérieure du dispositif 13 la plus éloignée du plan médian de l'armature 10 considérée étant celle en regard de la paraison 2 lors de l'insertion du composant 1 au sein de cette dernière. La figure 4 illustre en vue du dessus selon la direction d'extrusion la suite de l'étape d'insertion du composant 1 pour réservoir en matière plastique pour véhicule automobile lors de la fabrication dudit réservoir présentée à la figure 3. On observe une déformation de la paraison 2 sous l'effet du contact avec les premier et second moyens de déflection 11, 12 disposés en déport d'une armature 10. La course de la paraison 2 est guidée par les surfaces 110, 120 des respectivement premier moyen de déflection 11 et second moyen de déflection 12, ces derniers 11, 12 présentant des bords arrondis 1101, 1201. La présence des premier et second moyens de déflection 11, 12 permet d'éviter que la paraison n'entre en contact avec des dispositifs 13 situés sur l'armature 10, lesdits dispositifs 13 étant une vanne 131 et des éléments de renfort interne 130 dont certains se présentent sous la forme de pilier en forme de diabolo 1301 ou d'un système 1302 comprenant deux extrémités opposées en forme de parenthèse aptes à être fixées à la paraison, lesdites extrémités étant connectées par au moins deux lamelles.

## Revendications

1. Procédé d'insertion au sein d'une paraison (2) d'un composant pour la fabrication d'un réservoir en plastique pour véhicule automobile, , ledit composant (1) étant apte à être inséré au sein de la paraison (2) lors de la fabrication du réservoir en matière plastique pour véhicule automobile, le composant (1) ayant au moins une dimension dans au moins un plan perpendiculaire à la direction d'extrusion de la paraison sensiblement égale ou supérieure à la distance minimum entre deux points opposés situés sur une paroi intérieure pleine de la paraison dans ledit au moins un plan perpendiculaire, le composant (1) comprenant une armature (10) comprenant un premier moyen de déflection (11) comprenant au moins une surface (110) apte à entrer en contact et à guider la course de la paraison lorsque le composant (1) est inséré au sein de la paraison (2),
dans lequel :
- au début de l'insertion au sein de la paraison (2) du composant (1), la paraison (2) entre en contact avec le premier moyen de déflection (11), puis
- la course de la paraison (2) lorsque le composant (1) est inséré au sein de la paraison (2) est guidée par la surface (110) du premier moyen de déflection (11).

2. Procédé d'insertion au sein d'une paraison (2) d'un composant pour la fabrication d'un réservoir en plastique pour véhicule automobile selon la revendication 1, tel que le premier moyen de déflection (11) est situé en déport de l'armature (10).

3. Procédé d'insertion au sein d'une paraison (2) d'un composant pour la fabrication d'un réservoir en plastique pour véhicule automobile selon l'une quelconque des revendications précédentes, tel que le premier moyen de déflection (11) comprend au moins deux surfaces aptes à entrer en contact et à guider la course de la paraison (2) lorsque le composant (1) est inséré au sein de la paraison (2), préférentiellement lesdites au moins deux surfaces sont situées à l'opposé l'une de l'autre par rapport à l'armature (10).

4. Procédé d'insertion au sein d'une paraison (2) d'un composant pour la fabrication d'un réservoir en plastique pour véhicule automobile selon l'une quelconque des revendications précédentes, tel que le premier moyen de déflection (11) présente sur tout ou partie de sa surface (110) apte à entrer en contact et à guider la course de la paraison (2) une forme incurvée en regard de l'armature (10).

5. Procédé d'insertion au sein d'une paraison (2) d'un composant pour la fabrication d'un réservoir en plastique pour véhicule automobile selon l'une quelconque des revendications précédentes, tel que la taille du composant augmente selon une pente comprise entre 20° et 40° par écartement de la surface (110) du premier moyen de déflection (11) en regard de la paraison (2) par rapport à l'armature (10).

6. Procédé d'insertion au sein d'une paraison (2) d'un composant pour la fabrication d'un réservoir en plastique pour véhicule automobile selon l'une quelconque des revendications précédentes, tel qu'il comprend un second moyen de déflection (12) comportant une surface (120) apte à entrer en contact et à guider la course de la paraison (2) lorsque le composant (1) est inséré au sein de la paraison (2).

7. Procédé d'insertion au sein d'une paraison (2) d'un composant pour la fabrication d'un réservoir en plastique pour véhicule automobile selon une quelconque des revendications précédentes, tel que l'armature (10) comprend au moins un dispositif (13) choisi parmi un élément de renfort interne (130), un baffle anti-bruit ou baffle anti-slosh, une vanne (131), une ligne de ventilation ou de liquide, un capteur de température, un capteur de niveau ou un capteur de qualité.

8. Procédé d'insertion au sein d'une paraison (2) d'un composant pour la fabrication d'un réservoir en plastique pour véhicule automobile selon l'une quelconque des revendications précédentes, tel que le premier moyen de déflection (11) est à base d'un matériau dont la température de fusion est supérieure à la température de la paraison (2) en sortie de tête d'extrusion.

9. Procédé d'insertion au sein d'une paraison (2) d'un composant pour la fabrication d'un réservoir en plastique pour véhicule automobile selon l'une quelconque des revendications précédentes, tel que premier moyen de déflection (11) et/ou le second moyen de déflection (12) et/ou le dispositif (13) choisi parmi un élément de renfort interne (130), un baffle anti-bruit ou baffle anti-slosh, une vanne (131), une ligne de ventilation ou de liquide, un capteur de température, un capteur de niveau ou un capteur de qualités sont/est fixé(s) sur l'armature par « clipage ».

10. Procédé d'insertion au sein d'une paraison (2) d'un composant pour la fabrication d'un réservoir en plastique pour véhicule automobile selon l'une quelconque des revendications précédentes, tel que le premier moyen de déflection (11) et/ou le second moyen de déflexion (12) présente(nt) des bords arrondis (1101, 1201).

11. Procédé d'insertion au sein d'une paraison (2) d'un composant pour la fabrication d'un réservoir en plastique pour véhicule automobile selon l'une quelconque des revendications précédentes, tel que l'armature (10) comprend un organe de réception (14) apte à recevoir un moyen d'insertion tel qu'une canne d'insertion par exemple.

12. Procédé de fabrication d'un réservoir en matière plastique pour véhicule automobile, comprenant au moins les étapes successives suivantes :
• Extrusion d'une paraison (2) présentant une section interne et une extrémité libre, et
• Insertion selon l'une quelconque des revendications 1 à 11, au sein de la paraison (2) extrudée, par l'extrémité libre d'un composant (1).

13. Procédé de fabrication d'un réservoir en matière plastique pour véhicule automobile selon la revendication 12, tel qu'en début d'extrusion de la paraison (2), l'extrémité libre de la paraison (2) est à une altitude initiale et, en fin d'extrusion de la paraison (2), l'extrémité libre de la paraison (2) est à une altitude finale, procédé dans lequel, lors de l'extrusion de la paraison (2), l'extrémité libre de la paraison (2) se déplace de l'altitude initiale à l'altitude finale en parcourant une distance dite longueur finale de la paraison (2) et, dans lequel, le composant (1) est inséré au sein de la paraison (2) extrudée, par l'extrémité libre, lorsque l'extrémité libre de la paraison (2) extrudée a parcouru au moins 40 % de la longueur finale, préférentiellement au moins 60 % de la longueur finale.

## Patentansprüche

1. Verfahren zum Einführen einer Komponente in einen Vorformling (2) zur Herstellung eines Kunststoffbehälters für Kraftfahrzeuge, wobei die Komponente (1) bei der Herstellung des Kunststoffbehälters für Kraftfahrzeuge in den Vorformling (2) eingeführt werden kann, wobei die Komponente (1) mindestens eine Abmessung in mindestens einer Ebene senkrecht zur Extrusionsrichtung des Vorformlings aufweist, die im Wesentlichen gleich oder größer ist als der Mindestabstand zwischen zwei gegenüberliegenden Punkten auf einer massiven Innenwand des Vorformlings in der mindestens einen senkrechten Ebene, wobei die Komponente (1) eine Strebe (10) mit einer ersten Ablenkvorrichtung (11) aufweist, die mindestens eine Fläche (110) aufweist, die in der Lage ist, mit dem Vorformling in Kontakt zu kommen und dessen Weg zu führen, wenn die Komponente (1) in den Vorformling (2) eingeführt wird,
wobei:
- zu Beginn des Einführens der Komponente (1) in den Vorformling (2) der Vorformling (2) mit der ersten Ablenkvorrichtung (11) in Kontakt kommt, und
- der Weg des Vorformlings (2) beim Einführen der Komponente (1) in den Vorformling (2) durch die Fläche (110) der ersten Ablenkvorrichtung (11) geführt wird.

2. Verfahren zum Einführen einer Komponente in einen Vorformling (2) zur Herstellung eines Kunststoffbehälters für Kraftfahrzeuge gemäß Anspruch 1, wobei die erste Ablenkvorrichtung (11) versetzt zur Strebe (10) angeordnet ist.

3. Verfahren zum Einführen einer Komponente in einen Vorformling (2) zur Herstellung eines Kunststoffbehälters für Kraftfahrzeuge gemäß einem der vorstehenden Ansprüche, wobei die erste Ablenkvorrichtung (11) mindestens zwei Flächen aufweist, die in der Lage sind, mit dem Vorformling (2) in Kontakt zu kommen und dessen Bewegung zu führen, wenn die Komponente (1) in den Vorformling (2) eingeführt wird, wobei die mindestens zwei Flächen vorzugsweise gegenüberliegend zueinander in Bezug auf die Strebe (10) angeordnet sind.

4. Verfahren zum Einführen einer Komponente in einen Vorformling (2) zur Herstellung eines Kunststoffbehälters für Kraftfahrzeuge gemäß einem der vorstehenden Ansprüche, wobei die erste Ablenkvorrichtung (11) auf ihrer gesamten oder einem Teil ihrer Fläche (110) eine gekrümmte Form aufweist, die der Strebe (10) gegenüberliegt und mit dem Vorformling (2) in Kontakt kommen und dessen Weg führen kann.

5. Verfahren zum Einführen einer Komponente in einen Vorformling (2) zur Herstellung eines Kunststoffbehälters für Kraftfahrzeuge gemäß einem der vorstehenden Ansprüche, wobei die Größe der Komponente mit einer Neigung zwischen 20° und 40° durch den Abstand der Fläche (110) der ersten Ablenkvorrichtung (11) gegenüber dem Vorformling (2) in Bezug auf die Strebe (10) zunimmt.

6. Verfahren zum Einführen einer Komponente zur Herstellung eines Kunststoffbehälters für Kraftfahrzeuge gemäß einem der vorstehenden Ansprüche in einen Vorformling (2), wobei es eine zweite Ablenkvorrichtung (12) mit einer Fläche (120) aufweist, die in der Lage ist, mit dem Vorformling (2) in Kontakt zu kommen und dessen Weg zu führen, wenn die Komponente (1) in den Vorformling (2) eingeführt wird.

7. Verfahren zum Einführen einer Komponente zur Herstellung eines Kunststoffbehälters für Kraftfahrzeuge gemäß einem der vorstehenden Ansprüche in einen Vorformling (2), wobei die Strebe (10) mindestens eine Vorrichtung (13) aufweist, die aus einem inneren Verstärkungselement (130), einer Geräuschdämmung oder einer Schwappdämmung, einem Ventil (131), einer Entlüftungs- oder Flüssigkeitsleitung, einem Temperatursensor, einem Füllstandsensor oder einem Qualitätssensor ausgewählt ist.

8. Verfahren zum Einführen einer Komponente in einen Vorformling (2) zur Herstellung eines Kunststoffbehälters für Kraftfahrzeuge gemäß einem der vorstehenden Ansprüche, wobei die erste Ablenkvorrichtung (11) aus einem Material besteht, dessen Schmelztemperatur höher ist als die Temperatur des Vorformlings (2) am Ausgang des Extruderkopfes.

9. Verfahren zum Einführen einer Komponente in einen Vorformling (2) zur Herstellung eines Kunststoffbehälters für Kraftfahrzeuge gemäß einem der vorstehenden Ansprüche, wobei die erste Ablenkvorrichtung (11) und/oder die zweite Ablenkvorrichtung (12) und/oder die Vorrichtung (13) aus einem inneren Verstärkungselement (130), einer Schall- oder Schwallwand, einem Ventil (131), einer Entlüftungs- oder Flüssigkeitsleitung, einem Temperatursensor, einem Füllstandsensor oder einem Qualitätssensor, das/die durch "Clipsen" an der Strebe befestigt ist/sind.

10. Verfahren zum Einführen einer Komponente in einen Vorformling (2) zur Herstellung eines Kunststoffbehälters für Kraftfahrzeuge gemäß einem der vorstehenden Ansprüche, wobei die erste Ablenkvorrichtung (11) und/oder die zweite Ablenkvorrichtung (12) abgerundete Kanten (1101, 1201) aufweisen.

11. Verfahren zum Einführen einer Komponente in einen Vorformling (2) zur Herstellung eines Kunststoffbehälters für Kraftfahrzeuge gemäß einem der vorstehenden Ansprüche, wobei die Strebe (10) ein Aufnahmeelement (14) aufweist, das zum Aufnehmen eines Einführelements, beispielsweise einer Einführstange, geeignet ist.

12. Verfahren zur Herstellung eines Kunststoffbehälters für Kraftfahrzeuge, das mindestens die folgenden aufeinanderfolgenden Schritte umfasst:
- Extrudieren eines Vorformlings (2) mit einem Innenquerschnitt und einem freien Ende, und
- Einführen gemäß einem der Ansprüche 1 bis 11 in den extrudierten Vorformling (2) durch das freie Ende einer Komponente (1).

13. Verfahren zur Herstellung eines Kunststoffbehälters für Kraftfahrzeuge gemäß Anspruch 12, wobei zu Beginn der Extrusion des Vorformlings (2) das freie Ende des Vorformlings (2) auf einer Anfangshöhe liegt und am Ende der Extrusion des Vorformlings (2) sich das freie Ende des Vorformlings (2) auf einer Endhöhe befindet, wobei sich das freie Ende des Vorformlings (2) beim Extrudieren des Vorformlings (2) von der Anfangshöhe zur Endhöhe bewegt, indem es eine als Endlänge des Vorformlings (2) bezeichnete Strecke zurücklegt, und wobei die Komponente (1) in den extrudierten Vorformling (2) durch das freie Ende eingeführt wird, wenn das freie Ende des extrudierten Vorformlings (2) mindestens 40 % der Endlänge, vorzugsweise mindestens 60 % der Endlänge, zurückgelegt hat.

## Claims

1. Method for inserting a component into a parison (2) for the manufacture of a plastic tank for a motor vehicle,
said component (1) being capable of being inserted into the parison (2) during the manufacture of the plastic tank for the motor vehicle, the component (1) having at least one dimension in at least one plane perpendicular to the direction of extrusion of the parison substantially equal to or greater than the minimum distance between two opposite points located on a solid inner wall of the parison in said at least one perpendicular plane, the component (1) comprising a frame (10) comprising a first deflection means (11) comprising at least one surface (110) capable of contacting and guiding the travel of the parison when the component (1) is inserted into the parison (2),
wherein:
- when starting to insert the component (1) into the parison (2), the parison (2) comes into contact with the first deflection means (11), then
- the travel of the parison (2) when the component (1) is inserted into the parison (2) is guided by the surface (110) of the first deflection means (11).

2. Method for inserting a component into a parison (2) for manufacturing a plastic tank for a motor vehicle according to claim 1, such that the first deflection means (11) is located offset from the frame (10).

3. Method for inserting a component into a parison (2) for manufacturing a plastic tank for a motor vehicle according to any of the preceding claims, such that the first deflection means (11) comprises at least two surfaces capable of coming into contact with and guiding the travel of the parison (2) when the component (1) is inserted into the parison (2), preferably said at least two surfaces are located opposite one another with respect to the frame (10).

4. Method for inserting a component into a parison (2) for the manufacture of a plastic tank for a motor vehicle according to any of the preceding claims, such that the first deflection means (11) has, over all or part of its surface (110) capable of coming into contact with and guiding the travel of the parison (2) a curved shape facing the frame (10).

5. Method for inserting a component into a parison (2) for the manufacture of a plastic tank for a motor vehicle according to any of the preceding claims, such that the size of the component increases according to a slope comprised between 20° and 40° by separating the surface (110) of the first deflection means (11) facing the parison (2) relative to the frame (10).

6. Method for inserting a component into a parison (2) for the manufacture of a plastic tank for a motor vehicle according to any of the preceding claims, such that it comprises a second deflection means (12) having a surface (120) capable of contacting and guiding the travel of the parison (2) when the component (1) is inserted into the parison (2).

7. Method of inserting a component into a parison (2) for the manufacture of a plastic tank for a motor vehicle according to any of the preceding claims, such that the frame (10) comprises at least one device (13) selected from an internal reinforcement element (130), an anti-noise baffle or anti-slosh baffle, a valve (131), a ventilation or liquid line, a temperature sensor, a level sensor or a quality sensor.

8. Method for inserting a component into a parison (2) for the manufacture of a plastic tank for a motor vehicle according to any of the preceding claims, such that the first deflection means (11) is based on a material having a melting temperature is greater than the temperature of the parison (2) at the extrusion head outlet.

9. Method for inserting a component into a parison (2) for the manufacture of a plastic tank for a motor vehicle according to any of the preceding claims, such that the first deflection means (11) and/or the second deflection means (12) and/or the device (13) chosen from an internal reinforcement element (130), an ant-noise baffle or anti-slosh baffle, a valve (131), a ventilation or liquid line, a temperature sensor, a level sensor or a quality sensor, are fastened to the frame by clipping.

10. Method of inserting a component into a parison (2) for the manufacture of a plastic tank for a motor vehicle according to any of the preceding claims, such that the first deflection means (11) and/or the second deflection means (12) have rounded edges (1101, 1201).

11. Method for inserting a component into a parison (2) for the manufacture of a plastic tank for a motor vehicle according to any of the preceding claims, such that the frame (10) comprises a receiving member (14) capable of receiving an insertion means such as an insertion rod, for example.

12. Method for manufacturing a plastic tank for a motor vehicle, comprising at least the following steps in series:
• Extruding a parison (2) having an internal section and a free end, and
• Insertion, according to any one of claims 1 to 11, into the extruded parison (2), through the free end, of a component (1).

13. Method for manufacturing a plastic tank for a motor vehicle according to claim 12, such that at the beginning of the extrusion of the parison (2), the free end of the parison (2) is at an initial height and, at the end of the extrusion of the parison (2), the free end of the parison (2) is at a final height, wherein, during extrusion of the parison (2), the free end of the parison (2) moves from the initial height to the final height, by crossing a distance referred to as the final length of the parison (2), and wherein the component (1) is inserted into the extruded parison (2) through the free end when the free end of the extruded parison (2) has travelled at least 40% of the final length, preferably at least 60% of the final length.
